# EUROPEAN PATENT APPLICATION

(11) **EP 1 679 889 A2**
(43) Date of publication of application: **12.07.2006**
(21) Application number: 05020126.8
(22) Date of filing: 15.09.2005
(51) Int. Cl.: H04N 5/64

(54) **Display device and control method for generating anions**

(30) Priority: 07.01.2005 CN 200510003655
(71) Applicant: Quanta Storage Inc., Taoyuan hsien Taiwan (TW)
(72) Inventor: Chen, Chi-Huan, Luchu Taoyuan hsien (TW)
(74) Representative: Wagner, Bernhard Peter

(57) **Abstract**

The invention has a display device and a control method for generating anions, having a dust-proof net in front of an enclosure. A fan in the enclosure drives an air flow toward the dust-proof net facing the front of the display device. The anion generator is placed in the air flow to disperse anions through the dust-proof net. At least one speaker fixed by the side of the fan diffuses anions by its vibration wave. An anion sensor is placed on the dust-proof net to detect anion concentration for controlling anion quantity. Those positive ions and harmful particles around the user can be cleared instantly.

## Description

### Background of the Invention

### 1. Field of the Invention

The Invention relates to a display device, and more particularly to an anion generator which is disposed in the display device to control the anion concentration and improve the air quality around the display device.

### 2. Description of the Prior Art

Due to the prompt development of commerce and industry, the surrounding air which is filling with floating particles of smoke, dusty, and bacteria in the crowded area continues to deteriorate. Besides, as electronic commerce grows fast, the office is rife with electric products, such as computers, printers, and communication devices, to radiate lots of static electricity. In particular, the 5000 - 10000V positive static electricity radiated from the screen of a display device will deplete negative static electricity in the surrounding air. Therefore, users inhale excess positive static electricity during breath to cause sodium, potassium, not to easily pass through a cell membrane, and nutrients can't enter cells. Consequently, aged cells aren't able to void outside the body and are accumulated in the body to feel tired and depressed, and even to take sick. Furthermore, users inhaled the air with excess positive static electricity easily appear symptoms of thirst in the throat and lips, a stuffy nose, headache, and reduction of breath. Then, the work efficiency will descend.

The display device also generates free oxygen radical harmful to health. Free oxygen radical not only makes cells aged and destroys protein, nucleic acid, and carbohydrate, but also suppresses immunity, accelerates the hardening of the arteries, and causes a cancer. Besides, considering the pH. of body fluid, one of important conditions to maintain normal metabolism is to keep constant pH. balance of body fluid. That is, the pH. of blood keeps weak alkalinity about 7.4. The concentration of hydrogen ion is the important condition of determining the pH of body fluid, and the anion is able to decrease the concentration of hydrogen ion to steadily keep weak alkalinity of body fluid. Therefore, it is very important to keep the proper concentration of the anion in work surroundings.

It is a known technology to generate anion by means of piezoelectric ceramic transformers which combines a direct piezoelectric effect with a converse piezoelectric effect. The anions are generated through mechanical vibration and the transfer of electric energy, wherein a negative high voltage generator radiates anions of high density by an anion needle to form an anion flow. The anion flow diffuses fast to couple with floating particles of smoke, dusty, and bacteria, and increases the heavy of floating particles to drop down. Those harmful particles then will be eliminated from the air.

However, the anion generator is mostly disposed in an air conditioner or an air cleaner. It is so far away from personal working position that the positive ion generated by a display device facing users can't be effectively eliminated. It is inconvenient to turn on other apparatuses to eliminate the positive ions and the harmful floating particles while working. Meanwhile, those prior anion generators can not monitor the ion situation of the work surroundings to keep the optimum concentration of anion. Therefore, there are still some defects necessary to be resolved.

### Summary of the Invention

One object of the invention is to provide a display device and a control method, which generate anion to eliminate the positive ions and the harmful floating particles around working surroundings for improving air quality and working efficiency.

Another object of the invention is to provide a display device with an anion generator, which diffuses anions evenly and fast and enlarges the diffusion range by means of a fan or vibration waves of speakers, to fully clear the positive ions and the harmful floating particles around the user.

Further object of the invention is to provide a control method of a display device with an anion generator, which monitors the condition of anions around working surroundings by means of an anion sensor, to keep optimum situation of anions in working surroundings.

For achieving the above objects, the invention has a display device and a control method for generating anions, having a dust-proof net in front of an enclosure. A fan in the enclosure drives an air flow toward the dust-proof net facing the front of the display device. The anion generator is placed in the air flow to disperse anions through the dust-proof net. At least one speaker fixed by the side of the fan diffuses anions by its vibration wave. Therefore, those positive ions and harmful particles around the user can be cleared instantly.

For effectively controlling the anion in a predetermined concentration, an anion sensor is placed on the dust-proof net to detect anion concentration for controlling anion quantity. The steps of the control method are to start the display device, and an anion generator starts at the same time. Then, the anion concentration is detected to compare it with a predetermined value. If the anion concentration is greater than the predetermined value, stop the anion generator. Otherwise, the anion generator keeps operating to achieve optimum situation of anions in working surroundings.

### Brief Description of the Drawings

**FIG. 1** is a front view of the display device according to the invention.
**FIG. 2** is a cross-sectional view taken along the sectional line A-A in FIG. 1, which shows speakers in the display device according to the first embodiment of the invention.
**FIG. 3** is a block diagram of the control method according to the first embodiment of the invention.
**FIG. 4** is a cross-sectional view of the speakers according to the second embodiment of the invention.
**FIG. 5** is a cross-sectional view of the speakers according to the third embodiment of the invention.

### Detailed Description

Other objects, features, and advantages of the invention will become apparent from the following detailed description of the preferred but non-limiting embodiments. The following description is made with reference to the accompanying drawings. Anyone who is skilled in related technology would be able to understand and implement the technology accordingly.

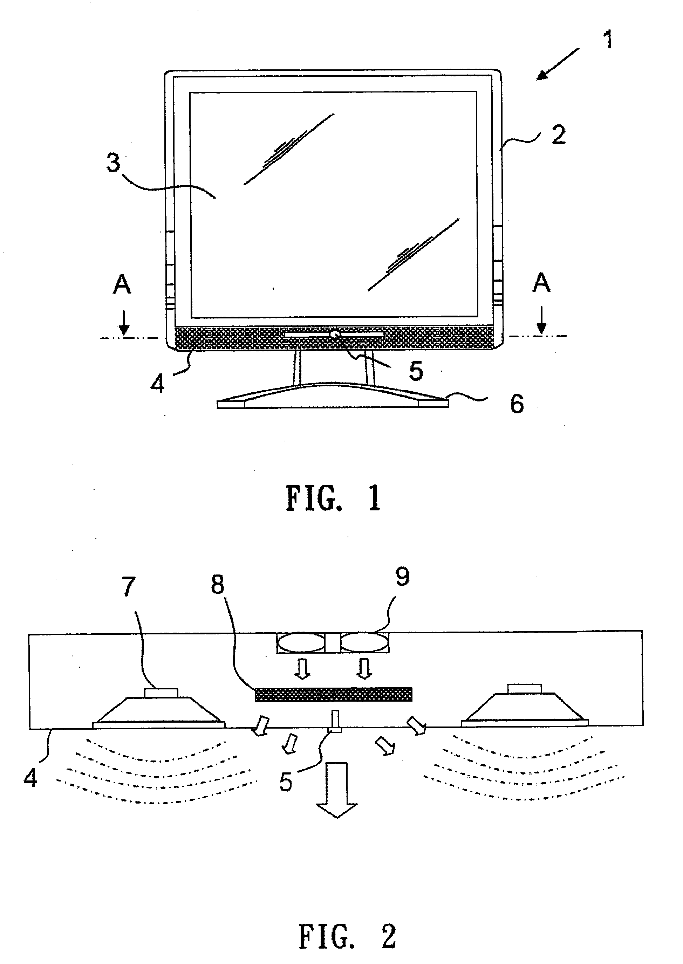

Referring to FIG. 1, the first embodiment of the invention shows a display device 1 generating anions, which includes a frame 2, a screen 3, an enclosure 4, an anion sensor 5, and a stand 6. The screen 3 and the enclosure 4 are mainly disposed in the frame 2, and the enclosure 4 is positioned in the edge of the frame 2. For example, the enclosure 4 is positioned under the screen 3 in this embodiment. The stand 6 supports the lower side of the frame 2. The anion sensor 5 is inserted on the front surface of the enclosure 4 to automatically detect the quantity of anions.

As shown in FIG. 2, the enclosure 4 accommodates a plurality of speakers 7, anion generators 8, and fans 9 inside. For example, this embodiment includes two speakers 7, one anion generator 8, and one fan 9. Two speakers 7 are individually fixed at one side of the front surface of the enclosure 4, and the fan 9 is disposed on the centre of the back side of the enclosure 4. The anion generator 8 is attached at the front of the fan 9 to radiate highly dense anions.

By means of the air stream blown forward the anion generator 8 by the fan 9, the highly dense anions radiated from the anion generator 8 in the enclosure 4 follow the air stream and are blown out of the enclosure 4 through a dust-proof net. Due to the dust-proof net facing the user, those anions will diffuse fast around the user. Furthermore, by means of vibration wave, the two speakers 7, bass speakers especially, diffuse anions evenly and enlarge the range of diffusion. Anions are easier to couple with floating particles of smoke, dusty, and bacteria, and increase the heavy of floating particles to drop down. Then, those harmful particles will be eliminated from the air to improve the air quality and raise working efficiency.

While working, users must closely face the display device 1 in a long time. The invention directly disposes the anion generator 8 in the display device 1, and anions generated from the anion generator 8 instantly disperse around the display device 1, especially the front side facing user, to eliminate harmful particles. Therefore, positive ions generated from the display device 1 can be also eliminated in time to prevent users from inhaling.

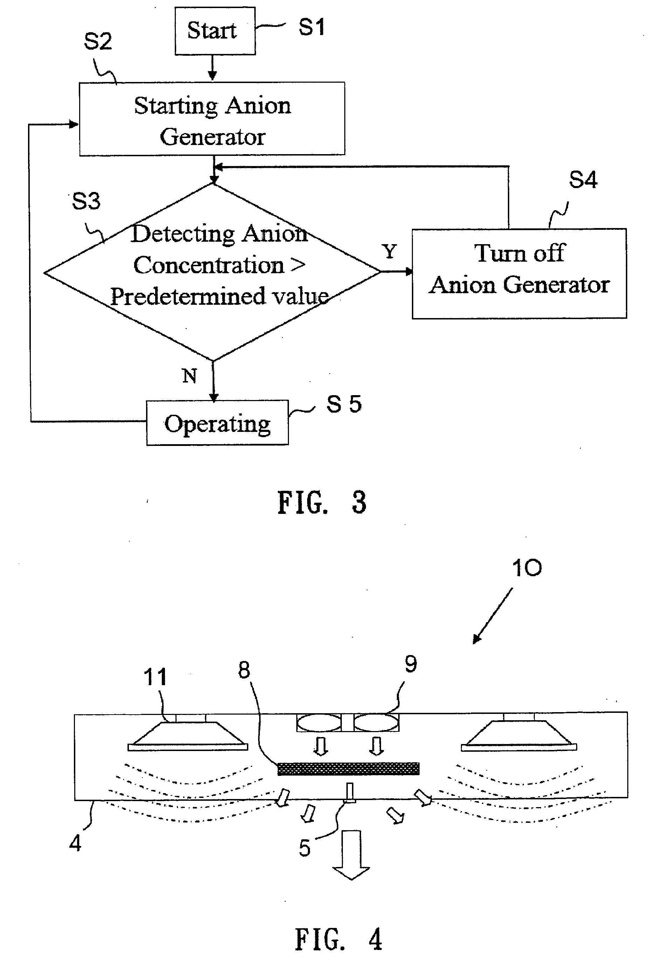

Furthermore, for effectively controlling anion concentration of surroundings at a predetermined concentration, the steps of the control method is shown in FIG. 3. Step S1 is first to turn on the display device 1, and step S2 starts an anion generator 8 at the same time. At step S3, the anion concentration around the display device 1 is detected to compare it with a predetermined value. If the anion concentration is greater than the predetermined value, stop the anion generator at step 4. Otherwise, the anion generator 8 keeps operating until achieving optimum situation of anions at step 5. Therefore, the display device 1 can generate enough anions not only to eliminate harmful particles in working surroundings, but also to reduce the concentration of hydrogen ions in the body fluid for steadily keeping weak alkalinity of the body fluid.

The second embodiment of the invention is shown in FIG. 4. A display device 10 basically has the same structure as the first embodiment. For simplifying description, it is to be noted that like parts are designated by like reference numerals. The difference between the second embodiment and the first embodiment is the position of speakers 11. In the second embodiment, speakers 11 are disposed at the back of the enclosure 4 to enlarge the range of anion diffusion.

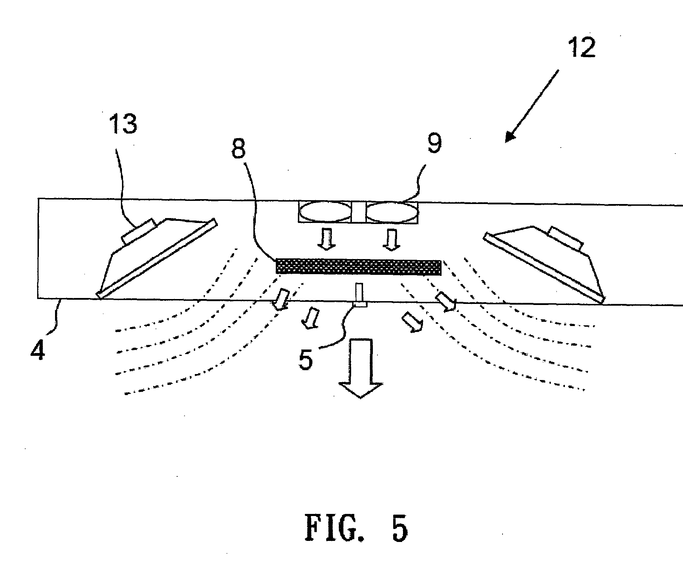

Similarly, the third embodiment of the invention is shown in FIG. 5. A display device 12 respectively turns two speakers 13 with a proper angle, and an angle is formed between the front surfaces of the enclosure 4 and speakers 13 to concentrate the vibration wave toward the user. Therefore, anions are exactly dispersed to the front of the user to completely eliminate harmful particles close to the user, and the action efficiency of anions will be enhanced.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A display device comprising :
- an enclosure having an inside, which a dust-proof net is disposed at the front surface;
- a fan fixed on the inside of the enclosure, which blows an air stream toward the dust-proof net;
- at least one speaker disposed at the side of the fan; and
- an anion generator disposed in the air stream to generate anions, wherein the anions disperse along the air stream.

2. The display device of claim 1, further comprising an anion sensor is disposed on the front surface of the enclosure to detect the quantity of anions.

3. The display device of claim 1, wherein the speaker diffuses anions by means of vibration wave.

4. The display device of claim 1, wherein the speaker is on the inside of the enclosure.

5. The display device of claim 1, wherein the anion generator is on the inside of the enclosure to generate anions which diffuses through the dust-proof net.

6. The display device of claim 1, wherein the speaker is a bass speaker.

7. The display device of claim 1, wherein the dust-proof net faces the front of the display device.

8. The display device of claim 1, wherein the speaker is disposed at the back of the enclosure.

9. The display device of claim 1, wherein the speaker turns some angle and has an angle with the enclosure.

10. A control method of a display device with an anion generator, comprising steps:
a) starting the display device;
b) starting the anion generator at the same;
c) detecting anion concentration to determine if the anion concentration is greater than a predetermined value;
d) if the anion concentration is greater than a predetermined value, stop the anion generator; and
e) if the anion concentration is not greater than a predetermined value, continue operating the anion generator.
